# EUROPÄISCHE PATENTANMELDUNG

(11) **EP 4 434 663 A1**
(43) Veröffentlichungstag der Anmeldung: **25.09.2024**
(21) Anmeldenummer: 24164821.1
(22) Anmeldetag: 20.03.2024
(51) Int. Cl.: B23D 79/02

(54) **WERKZEUG ZUR ENTFERNUNG EINER SCHWEISSWULST AN EINER INNENWANDUNG EINES LEITUNGSKANALS**

(30) Priorität: 21.03.2023 DE 202023101420 U; 11.07.2023 DE 202023103872 U
(71) Anmelder: Döhnert, Günter, 53359 Rheinbach (DE); Döhnert, Vera, 53359 Rheinbach (DE)
(72) Erfinder: Dummeyer, Carsten, 31603 Diepenau (DE); Döhnert, Günter, 53359 Rheinbach (DE); Döhnert, Vera, 53359 Rheinbach (DE)
(74) Vertreter: Wagner Albiger & Partner Patentanwälte mbB

(57) **Zusammenfassung**

Die vorliegende Anmeldung betrifft ein Werkzeug (1) zur Entfernung einer Schweißwulst an einer Innenwandung eines Leitungskanals (2), umfassend einen Grundkörper (3), eine mit dem Grundkörper (3) verbundene Betriebseinrichtung (4) und eine Schneideinrichtung (5), wobei der Grundkörper (3) in seinen Dimensionen an einen Innendurchmesser des Leitungskanals (2) angepasst ist, wobei die Betriebseinrichtung (4) in Drehmoment übertragender Weise mit dem Grundkörper (3) zusammenwirken kann, sodass mittels Aufbringens eines Drehmoments auf die Betriebseinrichtung (4) der Grundkörper (3) in seinem in den Leitungskanal (2) eingesetzten Zustand um seine Mittelachse (6) innerhalb des Leitungskanals (2) drehbar ist, wobei die Schneideinrichtung (5) ausgehend von einer Passivstellung in eine Aktivstellung überführbar ist, in der sie sich bestimmungsgemäß in schneidendem Eingriff mit der Schweißwulst befindet, wobei die Schneideinrichtung (5) einen sich radial erstreckenden Kragkörper (10) und ein radial außen an dem Kragkörper (10) gelagertes Schneidelement (11) umfasst.

Um ein Werkzeug bereitzustellen, dass eine verbesserte Bearbeitungsqualität bei der Entfernung einer Schweißwulst an der Innenwandung eines Leitungskanals ermöglicht, wird erfindungsgemäß vorgeschlagen, dass das Schneidelement (11) mittels mindestens einer Federeinheit (12, 13) an dem Kragkörper (10) gelagert ist, wobei die Federeinheit (12, 13) für das Schneidelement (11) einen radialen Federweg bereitstellt.

## Beschreibung

Die vorliegende Anmeldung betrifft ein Werkzeug zur Entfernung einer Schweißwulst an einer Innenwandung eines Leitungskanals gemäß dem Oberbegriff von Anspruch 1.

Leitungskanäle können insbesondere dazu verwendet werden, Leitungen unterirdisch eingehaust zu führen. Beispielsweise sind Leitungskanäle bei dem Bau von Stromtrassen von Bedeutung, wobei unterirdische Elektroleitungen nicht direkt im Erdreich verlegt werden, sondern in Leitungskanälen geführt sind. Ein solcher Leitungskanal kann beispielsweise aus Kunststoff gebildet sein und beispielsweise rohrförmig einen Innendurchmesser von 300 mm aufweisen. Die Leitungskanäle werden typischerweise in einzelnen Segmenten mit einer Länge zwischen 10 m und 20 m an einer jeweiligen Baustelle angeliefert. Um die einzelnen Segmente miteinander zu verbinden und auf diese Weise einen Leitungskanal zu bilden, werden die Segmente stirnseitig gestoßen. Die Verbindung erfolgt dabei typischerweise unter Ausbildung eines Stoffschlusses, wobei die Stirnseiten der miteinander zu stoßenden Segmente erhitzt und sodann in einem erhitzten Zustand unter Aufbringung einer Druckkraft zusammengedrückt werden. Das erwärmte und verflüssigte Material der Segmente verbindet sich dabei stoffschlüssig miteinander, wobei aufgrund der Aufbringung der Druckkraft die sogenannte Schweißwulst entsteht, die aus verdrängtem verflüssigtem Material besteht. Die Schweißwulst entsteht sowohl an der Innenwandung des gebildeten Leitungskanals als auch an der Außenwandung. Für die spätere Durchführung von Leitungen durch den Leitungskanal sind die an der Innenwandung befindlichen Schweißwülste unerwünscht, da Leitungen, die durch den Leitungskanal vorgeschoben werden, an die radial nach innen vorstehenden Schweißwülste anschlagen können. Daher ist es bei vielen Bauvorhaben eine Vorgabe, die Schweißwülste zu entfernen. Das erfindungsgemäße Werkzeug dient diesem Zweck.

Das erfindungsgemäße Werkzeug umfasst einen Grundkörper zur Führung des Werkzeugs in dem jeweilig zu bearbeitenden Leitungskanal. Der Grundkörper kann beispielsweise von einer Metallkonstruktion gebildet sein, die von einer Mehrzahl von miteinander verbundenen Metallteilen gebildet ist. Der Grundkörper kann insbesondere eine zylindrische Grundform aufweisen. Ferner umfasst das Werkzeug eine mit dem Grundkörper verbundene Betriebseinrichtung. Diese ist wesentlich, um das Werkzeug bestimmungsgemäß innerhalb des Leitungskanals zu betreiben. Ferner umfasst das Werkzeug eine Schneideinrichtung, mit der eine jeweilige Schweißwulst abgeschnitten und dadurch bestimmungsgemäß entfernt werden kann.

Der Grundkörper ist in seinen Dimensionen jeweils an den Leitungskanal, in dem die Schweißwulst zu entfernen ist, angepasst. Beispielsweise kann der Grundkörper eine zylindrische Grundform aufweisen, deren Durchmesser den Innendurchmesser des Leitungskanals geringfügig unterschreitet, sodass der Grundkörper in den Leitungskanal eingeführt und darin vorgetrieben werden kann. Die Dimensionen des Grundkörpers sind dabei derart auf den Leitungskanal abgestimmt, dass eine Mittelachse des Grundkörpers zumindest im Wesentlichen deckungsgleich zu einer Mittelachse des Leitungskanals verläuft. Bevorzugt beträgt ein Abstand der parallel zueinander orientierten Mittelachsen von Grundkörper und Leitungskanal in einem in den Leitungskanal eingesetzten Zustand des Werkzeugs höchstens 3 cm, vorzugsweise höchstens 2 cm, weiter vorzugsweise höchstens 1 cm.

Die Betriebseinrichtung ist in Drehmoment übertragender Weise mit dem Grundkörper verbindbar. Dies kann insbesondere infolge eines Anschlags erfolgen, wobei beispielsweise das Aufbringen eines Drehmoments auf die Betriebseinrichtung zunächst zu einer Drehung der Betriebseinrichtung relativ zu dem Grundkörper führt und schließlich infolge eines mittelbaren oder unmittelbaren Anschlags der Betriebseinrichtung an dem Grundkörper dazu führt, dass bei der Aufbringung eines Drehmoments auf die Betriebseinrichtung selbiges auf den Grundkörper übertragen wird. Auf diese Weise kann das Werkzeug mittels Aufbringens eines Drehmoments auf die Betriebseinrichtung innerhalb des Leitungskanals um die Mittelachse des Grundkörpers gedreht werden.

Dieses Drehen des Grundkörpers erfolgt mit dem Ziel, die Schneideinrichtung bestimmungsgemäß an der sich in Umfangsrichtung des Leitungskanals erstreckenden Schweißwulst entlangzuführen und letztere im Zuge dessen zu entfernen. Daher ist es typischerweise vorgesehen, dass für ein vollständiges Entfernen der Schweißwulst der Grundkörper um mindestens 360° um seine Mittelachse gedreht wird, sodass die Schneideinrichtung die Schweißwulst in Umfangsrichtung des Leitungskanals einmal vollständig abfahren und im Zuge dessen abschneiden kann.

Um die Schneideinrichtung gezielt in Eingriff mit der Schweißwulst bringen zu können, ist diese ausgehend von einer Passivstellung, in der sie sich bestimmungsgemäß außer Eingriff mit der Schweißwulst befindet, in eine Aktivstellung überführbar, in der sie sich bestimmungsgemäß in schneidendem Eingriff mit der Schweißwulst befindet. Diese Überführung der Schneideinrichtung von ihrer Passivstellung in ihre Aktivstellung geht vorzugsweise damit einher, dass sich zumindest ein Schneidelement der Schneideinrichtung in radiale Richtung bezogen auf die Mittelachse des Leitungskanals nach außen bewegt. Auf diese Weise kann das Werkzeug zunächst bis an eine Einsatzstelle innerhalb des jeweiligen Leitungskanals vorgetrieben werden, während die Schneideinrichtung in ihrer Passivstellung vorliegt und dabei noch nicht mit der Innenwandung des Leitungskanals eingreift bzw. kollidiert. Erst bei der Ankunft des Werkzeugs an der Einsatzstelle kann sodann die Schneideinrichtung in ihre Aktivstellung überführt werden und deren Schneidelement bestimmungsgemäß in Kontakt mit der Schweißwulst treten. Die Überführung der Schneideinrichtung aus der Passiv- in die Aktivstellung kann auch selbsttätig durch eine geeignete Federvorspannung der Schneideinrichtung bewirkt werden, sodass das erfindungsgemäße Werkzeug lediglich an die Einsatzstelle vorgeschoben werden muss, bevor das federbelastete Schneidelement bestimmungsgemäß in Kontakt mit der Schweißwulst tritt.

Die Schneideinrichtung umfasst einen sich radial erstreckenden Kragkörper und ein radial außen an dem Kragkörper gelagertes Schneidelement. Letzteres kann beispielsweise von einer metallischen Klinge gebildet sein, die eine Schneidkante für das Abschneiden der Schweißwulst umfasst.

### Stand der Technik

Ein Werkzeug der vorstehend beschriebenen Art ist im Stand der Technik bereits bekannt. Hierbei ist es bekannt, dass die Schneideinrichtung mit ihrem Schneidelement in Eingriff mit der jeweiligen Schweißwulst gebracht wird, woraufhin der Grundkörper innerhalb des Leitungskanals um seine Mittelachse gedreht wird und dadurch das Schneidelement eine volle Umdrehung entlang der Schweißwulst ausführt.

Hierbei hat es sich jedoch als problematisch herausgestellt, dass sich das Schneidelement im Zuge der Drehung des Grundkörpers prinzipbedingt auf einer Kreisbahn um die Mittelachse des Grundkörpers bewegt. Eine jeweils zu entfernende Schweißwulst erstreckt in aller Regel in einem senkrecht zu der Mittelachse des Leitungskanals orientierten Ebene, in der die vormaligen Segmente stirnseitig zur Bildung des Leitungskanals miteinander verbunden wurden. Der Querschnitt des Leitungskanals in dieser Ebene weist grundsätzlich einen kreisförmigen Querschnitt auf. In der Praxis kommt es jedoch regelmäßig zu Abweichungen von der grundsätzlichen Kreisform, beispielsweise infolge von mechanischen Einwirkungen auf den Leitungskanal bzw. die einzelnen Segmente. Ebenfalls hat sich herausgestellt, dass eine starke Temperaturbelastung auf den Leitungskanals dazu führen kann, dass sich dieser zumindest leicht verformen und daher zu dem Zeitpunkt, zu dem die Schweißwulst mittels des Werkzeugs entfernt werden soll, zumindest minimal von seiner Kreisform abweichen kann.

Dies hat zur Folge, dass das Schneidelement oftmals zu tief in die Innenwandung des Leitungskanals eindringt oder umgekehrt sich zu weit von der Innenwandung entfernt und die Schweißwulst nicht vollständig entfernt, sondern ein gewisser Rest der Schweißwulst erhalten bleibt. Beide Effekte sind unerwünscht und führen zu einem nicht-optimalen Ergebnis der Bearbeitung des jeweiligen Leitungskanals.

### Aufgabe

Mithin liegt der vorliegenden Anmeldung die Aufgabe zugrunde, ein Werkzeug bereitzustellen, das eine verbesserte Bearbeitungsqualität bei der Entfernung einer Schweißwulst an der Innenwandung eines Leitungskanals ermöglicht.

### Lösung

Die zugrunde liegende Aufgabe wird erfindungsgemäß mittels eines Werkzeugs mit den Merkmalen des Anspruchs 1 gelöst. Vorteilhafte Ausgestaltungen ergeben sich aus den zugehörigen Unteransprüchen.

Das Werkzeug ist dadurch gekennzeichnet, dass das Schneidelement mittels mindestens einer Federeinheit an dem Tragkörper gelagert ist. Die Federeinheit ist derart eingerichtet, dass sie für das Schneidelement einen radialen Federweg bereitstellt. Auf diese Weise kann die Federeinheit zumindest bei Vorliegen der Schneideinrichtung in ihrer Aktivstellung sowie bei bestimmungsgemäßem Betrieb des Werkzeugs an der Innenwandung des jeweiligen Leitungskanals in radiale Richtung gefedert geführt werden.

Die mindestens eine Federeinheit kann beispielsweise von einer Spiralfeder gebildet sein, die zur Bereitstellung des beschriebenen Federwegs axial in Richtung einer Federachse komprimierbar ist. Auf diese Weise ist die Federeinrichtung dazu geeignet, das Schneidelement in radiale Richtung gegen die Innenwandung vorzuspannen, wobei bei einer Unregelmäßigkeit in der Querschnittsform des Leitungskanals das Schneidelement entgegen einer Federkraft der Federeinheit in radiale Richtung verdrängt werden kann, sodass es sich an die tatsächliche Querschnittsform des Leitungskanals anpasst. Bevorzugt ist die Federeinheit derart an dem Schneidelement ausgerichtet, dass die Federachse der Federeinheit sich bei Vorliegen der Schneideinrichtung in ihrer Aktivstellung zumindest im Wesentlichen radial bezogen auf die Mittelachse des Grundkörpers (und mithin die Mittelachse des Leitungskanals) erstreckt.

Insbesondere bei größeren mit dem erfindungsgemäßen Werkzeug zu bearbeitenden Innendurchmessern des Leitungskanals können anstelle von Spiralfedern auch Gasdruckfedern o.dgl. als Federeinheit vorgesehen sein.

Das erfindungsgemäße Werkzeug hat viele Vorteile. Insbesondere ermöglicht es die saubere Entfernung einer jeweiligen Schweißwulst auch dann, wenn der Querschnitt des Leitungskanals an der jeweiligen Einsatzstelle von seiner grundsätzlichen Kreisform abweicht. Dabei ist die Schneideinrichtung dazu in der Lage, einem radialen Versatz der Schweißwulst gegenüber einer genauen Kreisform sowohl nach außen als auch nach innen zu folgen. Mit anderen Worten kann mittels des Werkzeugs die Schweißwulst auch bei einer beispielsweise leicht ovalen Form des Leitungskanals sauber und vollständig entfernt werden. Hierdurch ist die Notwendigkeit von Nacharbeiten und dergleichen deutlich reduziert, sodass ein zügigerer Arbeitsfortschritt erreicht wird.

In besonders bevorzugter Ausgestaltung ist das Schneidelement mittels mindestens zweier Federeinheiten an dem Tragkörper gelagert. Bei dieser Ausgestaltung ist es ferner von Vorteil, wenn die Federeinheiten an einander gegenüberliegenden Enden des Schneidelements an selbiges angeschlossen sind. Dem liegt die Überlegung zugrunde, dass das Schneidelement parallel zu der Mittelachse des Grundkörpers orientiert sein kann, sodass sich die Schneidkante des Schneidelements ebenfalls parallel zu der Mittelachse des Grundkörpers erstreckt. Die Schneidkante kann dabei eine Länge von beispielsweise 5 cm aufweisen. Auf diese Weise ist sichergestellt, dass das Schneidelement die Schweißwulst auf deren gesamter Breite erfasst und zudem bei der Positionierung des Werkzeugs innerhalb des Leitungskanals eine millimetergenaue Ausrichtung der Schneideinrichtung relativ zu der Schweißwulst nicht erforderlich ist.

Die zwei Federeinheiten haben den Vorteil, dass das Schneidelement nicht nur als Ganzes in radiale Richtung bewegbar ist, sondern die jeweiligen Enden des Schneidelements unabhängig voneinander federnd mittels jeweils einer der Federeinheiten geführt sind. Bei einer unterschiedlichen Auslenkung der Federeinheiten führt dies zu einer Schrägstellung der Schneidkante. Die Möglichkeit, eine solche Bewegung auszuführen, bietet den Vorteil, dass das Schneidelement bei unsauberen Stoßverbindungen der jeweils zusammengefügten Segmente des Leitungskanals einen etwaigen Versatz in der Innenwandung des Leitungskanals an der Stoßkante ausgleichen kann. Beispielsweise ist es denkbar, dass die Segmente im Zuge ihrer Verbindung miteinander nicht sauber stirnseitig gegeneinander gedrückt wurden, sondern ein radialer Versatz zwischen den Wandungen der Segmente von beispielsweise 1 mm vorliegt. Die Schrägstellung des Schneidelements (und somit auch der Schneidkante) ermöglicht, dass das Schneidelement auf beiden Seiten der Schweißwulst nicht bis unter die Schweißwulst in die Innenwandung des Leitungskanals einschneiden muss, um die Schweißwulst sauber zu entfernen.

In besonders bevorzugter Ausgestaltung des Werkzeugs ist die Schneideinrichtung an der Betriebseinrichtung angeordnet und wirkt mit dieser zusammen. Diese Zusammenwirkung besteht darin, dass die Schneideinrichtung mittels der Betriebseinrichtung zwischen ihrer Passivstellung und ihre Aktivstellung überführbar ist. Zu diesem Zweck kann ein Drehmoment auf die Betriebseinrichtung ausgeübt werden, das eine Drehung der Betriebseinrichtung um ihre Schwenkachse relativ zu dem Grundkörper bewirkt, wobei die Betriebseinrichtung im Zuge dessen die Schneideinrichtung "mitnimmt". Mit anderen Worten wird mittels Aufbringens eines Drehmoments auf die Betriebseinrichtung effektiv die Schneideinrichtung um die Schwenkachse der Betriebseinrichtung und damit relativ zu dem Grundkörper verschwenkt.

Diese Ausgestaltung hat den besonderen Vorteil, dass die Betriebseinrichtung in einer Doppelfunktion genutzt werden kann, nämlich sowohl zur Überführung der Schneideinrichtung zwischen ihrer Passivstellung und ihre Aktivstellung als auch zur Übertragung eines Drehmoments auf den Grundkörper, wodurch in der eingangs beschriebenen Weise der Grundkörper - und mithin das Werkzeug insgesamt - um die Mittelachse des Grundkörpers innerhalb des Leitungskanals gedreht werden kann.

Um dies zu erreichen, kann es weiterhin besonders vorteilhaft sein, wenn die Schwenkachse der Betriebseinrichtung parallel zu der Mittelachse des Grundkörpers orientiert ist sowie sich in einem Abstand zu der Mittelachse des Grundkörpers erstreckt. Mit anderen Worten ist es von Vorteil, wenn die Betriebseinrichtung außermittig bezogen auf den Grundkörper ausgerichtet ist. Dies hat nämlich zur Folge, dass die Betriebseinrichtung bei Vorliegen des Werkzeugs in einem in den Leitungskanal eingesetzten Zustand außermittig bezogen auf die Mittelachse des Leitungskanals ausgerichtet ist. Diese außermittige Anordnung der Schwenkachse hat den Vorteil, dass das Schneidelement der Schneideinrichtung mittels einer Verschwenkung der Schneideinrichtung in ihre Aktivstellung effektiv eine radiale Bewegungskomponente bezogen auf die Mittelachse des Grundkörpers bzw. des Leitungskanals erfährt. Auf diese Weise wird das Ziel erreicht, dass sich bei Vorliegen der Schneideinrichtung in ihrer Passivstellung das Schneidelement zunächst außer Eingriff mit der Innenwandung des Leitungskanals befindet und sodann zum Zweck der Entfernung der Schweißwulst mit selbiger in schneidenden Kontakt tritt. Dies erfolgt mittels der Verschwenkung der Schneideinrichtung um die Schwenkachse der Betriebseinrichtung, bei der die Schneideinrichtung auf einer Kreisbahn geführt wird. Da diese außermittig bezogen auf den kreisförmigen Querschnitt des Leitungskanals verläuft, wird Schneidelement bezogen auf die Mittelachse des Leitungskanals radial nach außen bewegt und greift schließlich mit der Schweißwulst ein.

Aufgrund der angepassten Dimensionen des Grundkörpers bezogen auf den Leitungskanal kann eine weitergehende Aufbringung eines Drehmoments auf die Betriebseinrichtung zu einem Zeitpunkt, zu dem sich die Schneideinrichtung bereits in ihrer Aktivstellung und mithin das Schneidelement in Eingriff mit der Schweißwulst befinden, das Werkzeug in aller Regel nicht weiter um die außermittige Schwenkachse der Betriebseinrichtung gedreht werden, da dies eine Bewegung des Grundkörpers innerhalb des Leitungskanals in eine Richtung senkrecht zu der Mittelachse des Leitungskanals erfordern würde. Da der Grundkörper jedoch im Wesentlichen passgenau in den Leitungskanal eingepasst ist und eine solche Bewegung damit versperrt ist, wird das Drehmoment automatisch eine Drehung des Grundkörpers selbst um dessen Mittelachse zur Folge haben, da dies der einzig verbleibende Freiheitsgrad des Werkzeugs bezogen auf das einwirkende Drehmoment ist. Im Ergebnis wird in der vorstehend erläuterten Weise die in ihrer Aktivstellung befindliche Schneideinrichtung um die Mittelachse des Grundkörpers und mithin die Mittelachse des Leitungskanals gedreht, wodurch das Schneidelement die Schweißwulst entlang des Umfangs der Innenwandung des Leitungskanals abschneiden kann.

In einer weiteren vorteilhaften Ausgestaltung des Werkzeugs kann der Grundkörper mindestens ein Anschlagelement umfassen, an dem die Schneideinrichtung infolge ihrer Verschwenkung um die Schwenkachse anschlagen kann. Ein solches Anschlagelement ist dazu geeignet, die Betriebseinrichtung in Drehmoment übertragender Weise mit dem Grundkörper zu koppeln. Dies folgt der Überlegung, dass die Schneideinrichtung bei der Aufbringung eines Drehmoments auf die Betriebseinrichtung um die Schwenkachse verschwenkbar ist, wobei eine Relativbewegung zwischen der Betriebseinrichtung und dem Grundkörper stattfindet. Zu diesem Zeitpunkt findet entsprechend noch keine Übertragung des auf die Betriebseinrichtung aufgebrachten Drehmoments auf den Grundkörper statt. Hierzu ist es notwendig, die Betriebseinrichtung und den Grundkörper in Drehmoment übertragender Weise miteinander zu koppeln. Dies wird mittels des bevorzugten Anschlagelements erreicht, gegen das die Schneideinrichtung anschlägt, sodass eine weitere Verdrehung der Schneideinrichtung relativ zu dem Grundkörper nicht möglich ist. Die weitergehende Aufbringung des Drehmoments auf die Betriebseinrichtung führt folglich dazu, dass selbiges über das Anschlagelement auf den Grundkörper übertragen wird. Hierdurch kann gemäß vorstehender Erläuterung die Drehung des Grundkörpers um dessen Mittelachse erfolgen.

In besonders bevorzugter Ausgestaltung befindet sich die Schneideinrichtung bei ihrem Anschlag an dem Anschlagelement, das heißt in einem an dem Anschlagelement angeschlagenen Zustand, in ihrer Aktivstellung. Für einen Arbeitsvorgang unter Verwendung eines derart vorteilhaft ausgebildeten Werkzeugs bedeutet dies das Folgende: Das Werkzeug wird bei Vorliegen der Schneideinrichtung in ihrer Passivstellung in einen jeweils zu bearbeitenden Leitungskanal eingeführt und dort bis an eine Einsatzstelle entlang der Mittelachse des Leitungskanals vorgetrieben. Dort wird das Werkzeug relativ zu der zu entfernenden Schweißwulst ausgerichtet, sodass die Schneideinrichtung in schneidenden Eingriff mit der Schweißwulst gebracht werden kann. Dies wird dadurch erreicht, dass ein Drehmoment auf die Betriebseinrichtung aufgebracht wird, wodurch sich diese um ihre Schwenkachse relativ zu dem Grundkörper dreht. Da die Schneideinrichtung mit der Betriebseinrichtung verbunden ist bzw. an letzterer angeordnet ist, wird gleichzeitig die Schneideinrichtung um die Schwenkachse relativ zu dem Grundkörper verschwenkt. Hierdurch wird die Schneideinrichtung ausgehend von ihrer Passivstellung ihre Aktivstellung überführt, sodass das Schneidelement in schneidenden Eingriff mit der Schweißwulst gerät. Die Aktivstellung ist dabei dadurch definiert, dass die Schneideinrichtung gegen das Anschlagelement des Grundkörpers schlägt, wodurch eine weitergehende Verschwenkung der Schneideinrichtung um die Schwenkachse unterbunden ist. Nunmehr wird weiterhin ein Drehmoment in unveränderter Drehrichtung auf die Betriebseinrichtung aufgebracht, woraufhin aufgrund der Koppelung der Betriebseinrichtung mit dem Grundkörper infolge des Anschlags der Schneideinrichtung an dem Anschlagelement der Grundkörper um dessen Mittelachse innerhalb des Leitungskanals gedreht wird. Da der Grundkörper in seinen Dimensionen an den Leitungskanal angepasst ist, ist dies gleichbedeutend mit einer Drehung des Werkzeugs insgesamt um die Mittelachse des Leitungskanals. Auf diese Weise wird die Schneideinrichtung mit ihrem Schneidelement mindestens eine volle Umdrehung entlang der Innenwandung des Leitungskanals geführt, wobei im Zuge dessen wunschgemäß die Schweißwulst abgeschnitten und dadurch entfernt wird. Nach erfolgter Entfernung der Schweißwulst wird die Schneideinrichtung zurück in ihre Passivstellung überführt und das Werkzeug kann zurück aus dem Leitungskanal herausgezogen werden, womit der Arbeitsvorgang beendet ist.

In weiterhin bevorzugter Ausgestaltung des Werkzeugs umfasst dieses zusätzlich zu dem ersten Anschlagelement mindestens ein zweites Anschlagelement, das in Umfangsrichtung bezogen auf die Schwenkachse der Betriebseinrichtung von dem ersten Anschlagelement um ein Winkelmaß versetzt angeordnet ist. Auf diese Weise bietet das zweite Anschlagelement ebenfalls einen Anschlag für die Schneideinrichtung. Analog zu dem ersten Anschlagelement ist das zweite Anschlagelement dazu geeignet, ein auf die Betriebseinrichtung aufgebrachtes Drehmoment infolge des Anschlags des Schneideinrichtung auf den Grundkörper zu übertragen.

In bevorzugter Weise definiert das zweite Anschlagelement die Passivstellung der Schneideinrichtung. Entsprechend ist es von Vorteil, wenn sich die Schneideinrichtung in einem Schwenkraum zwischen den beiden Anschlägen befindet. Dies hat den Effekt, dass die Schneideinrichtung je nach Drehrichtung um die Schwenkachse der Betriebseinrichtung entweder an einem Ende es Schwenkraums gegen den einen Anschlag oder an dem anderen Ende des Schwenkraums an den anderen Anschlag schlägt. Die Übertragung eines Drehmoments von der Betriebseinrichtung auf den Grundkörper ist jeweils nur in die Richtung möglich, in die die Schneideinrichtung zuvor gegen das jeweilige Anschlagelement bewegt wurde. Mit anderen Worten sind infolge der Anschläge der Schneideinrichtung an den Anschlagelementen von der Betriebseinrichtung auf den Grundkörper übertragbare Drehmomente bezogen auf die Schwenkachse einander entgegengesetzt orientiert, sodass der Grundkörper bei dem Anschlag der Schneideinrichtung an dem ersten Anschlagelement in eine erste Drehrichtung und bei dem Anschlag der Schneideinrichtung an dem zweiten Anschlagelement in eine der ersten Drehrichtung entgegengesetzte zweite Drehrichtung um seine Mittelachse innerhalb des Leitungskanals drehbar ist.

Der von den Anschlagelementen begrenzte Schwenkraum kann sich bezogen auf die Schwenkachse der Betriebseinrichtung beispielsweise über ein Winkelmaß zwischen 60° und 90°, vorzugsweise zwischen 70° und 80°, erstrecken. In diesem Schwenkraum ist die Schneideinrichtung relativ zu dem Grundkörper verschwenkbar, ohne gegen eines der Anschlagelemente zu schlagen.

Sofern das zweite Anschlagelement vorgesehen ist, kann zum einen die Schneideinrichtung bei der Einführung des Werkzeugs in einen zu bearbeitenden Leitungskanal besonders einfach in definierter Position an dem zweiten Anschlagelement gelagert sein. Zum anderen bietet das zweite Anschlagelement die Möglichkeit, nach erfolgter Entfernung einer jeweiligen Schweißwulst das Werkzeug um dessen Mittelachse zumindest ein Stück weit zurück zu drehen. Auch kann es gewünscht sein, das Werkzeug um dessen Mittelachse innerhalb des Leitungskanals zu drehen, ohne die Schneideinrichtung in Eingriff mit einer Schweißwulst bzw. der Innenwandung des jeweiligen Leitungskanals zu bringen. Dies kann beispielsweise gewünscht sein, um eine optische Inspektion der Innenwandung mittels einer an dem Werkzeug montierten Kamera vorzunehmen. Eine entsprechende Ausgestaltung ist nachstehend gesondert erläutert. Das zweite Anschlagelement ermöglicht mithin die Aufbringung eines Drehmoments auf den Grundkörper, und zwar derart, dass dieser ohne schneidenden Eingriff des Schneidelements mit der Innenwandung bzw. einer Schweißwulst innerhalb des Leitungskanals gedreht wird, da sich die Schneideinrichtung in ihrer Passivstellung befindet.

Das Werkzeug weiter ausgestaltend kann die Schneideinrichtung in Richtung der Mittelachse des Grundkörpers betrachtet über ein distales Ende des Grundkörpers hinaus vorstehen. Mit anderen Worten kann es vorteilhaft sein, wenn die Schneideinrichtung ausgehend von dem Grundkörper nach vorne auskragt. Diese Ausgestaltung hat den Vorteil, dass die jeweils zu entfernende Schweißwulst nicht erst von dem Grundkörper überfahren bzw. überwunden werden muss. Stattdessen kann sich der Grundkörper bei bestimmungsgemäßem Einsatz der Schneideinrichtung vollständig diesseits der Schweißwulst befinden, während die Schneideinrichtung aufgrund ihrer gegenüber dem Grundkörper vorstehenden Anordnung sich bereits an der richtigen Einsatzstelle befindet. Da das Überwinden der (noch nicht entfernten) Schweißwulst unterbleiben kann, ist insgesamt der Vortrieb des Werkzeugs innerhalb des Leitungskanals sowie die richtige Ausrichtung desselben bezogen auf die Schweißwulst vereinfacht.

In einer weiterhin vorteilhaften Ausgestaltung kann das Werkzeug eine Positionierungshilfe aufweisen, die sich ausgehend von einem distalen Ende des Grundkörpers in eine Richtung parallel zu der Mittelachse des Grundkörpers von dem Grundkörper weg erstreckt. Mit anderen Worten steht die Positionierungshilfe ausgehend von dem distalen Ende des Grundkörpers über selbigen hinaus vor. Vorteilhafterweise befindet sich die Positionierungshilfe in einem bezogen auf die Mittelachse des Grundkörpers radial äußeren Randbereich des Grundkörpers. Die Positionierungshilfe ist dazu vorgesehen und eingerichtet, stirnseitig gegen die (noch nicht entfernte) Schweißwulst zu stoßen, bevor die Schneideinrichtung zum Einsatz kommt. Dabei ist die Positionierungshilfe derart auf die Schneideinrichtung abgestimmt ausgebildet, dass bei dem stirnseitigen Anschlag der Positionierungshilfe an der Schweißwulst die Schneideinrichtung in bestimmungsgemäßer Position relativ zu der Schweißwulst ausgerichtet ist. Für das Entfernen der Schweißwulst ist sodann gemäß vorstehender Erläuterung lediglich die Schneideinrichtung in ihre Aktivstellung zu überführen und das Werkzeug daraufhin um dessen Mittelachse innerhalb des Leitungskanals zu drehen. Die Positionierungshilfe schafft mithin eine taktile Rückmeldung an einem Bediener des Werkzeugs, die ihm signalisiert, dass das Werkzeug sich an seiner bestimmungsgemäßen Einsatzstelle befindet. Eine optische oder sonstige Verifikation der Position des Werkzeugs ist nicht erforderlich.

Weiterhin kann eine solche Ausgestaltung des Werkzeugs von Vorteil sein, bei der der Grundkörper eine Mehrzahl von radial bezogen auf die Mittelachse außenliegenden Führungselementen aufweist. Die Führungselemente sind zur Führung des Werkzeugs an der Innenwandung des Leitungskanals eingerichtet. Mithin treten die Führungselemente in unmittelbaren Kontakt mit der Innenwandung des jeweiligen Leitungskanals. Da bei den gängigen Leitungskanälen die Innenwandungen in aller Regel sehr glatt ausgeführt sind, ist es für einen zweckmäßigen Vortrieb des Werkzeugs entlang des Leitungskanals normalerweise ausreichend, wenn die Führungselemente Gleitflächen aufweisen, sodass der Grundkörper entlang der Innenwandung des Leitungskanals gleiten kann. Eine Ausgestaltung der Führungselemente mit Rollen zum Abrollen des Grundkörpers an der Innenwandung des Leitungskanals ist ebenfalls denkbar.

Tatsächlich kann es von Vorteil sein, wenn die Führungselemente jeweils mindestens eine Führungsrolle aufweisen, die jedoch nicht für den axialen Vortrieb des Werkzeugs entlang des Leitungskanals, sondern für die Drehung des Werkzeugs innerhalb des Leitungskanals beim bestimmungsgemäßen Eingriff der Schneideinrichtung mit der zu entfernenden Schweißwulst bestimmt sind. Entsprechend sind die Drehachsen der Führungsrollen bevorzugt parallel zu der Mittelachse des Grundkörpers orientiert. Hierdurch wird erreicht, dass zusätzlich zu dem für das Abschneiden der Schweißwulst erforderliche Drehmoment kein weiterer Widerstand für die Führung des Grundkörpers an der Innenwandung des Leitungskanals addiert wird.

In besonders bevorzugter Ausgestaltung können die Führungselemente in radiale Richtung verstellbar ausgebildet sein, sodass der Grundkörper besonders leicht in seiner Dimension an Leitungskanäle mit verschiedenen Innendurchmessern angepasst werden kann. Die Feststellung der Führungselemente erfolgt dabei stets zu dem Zweck, die Dimensionen des Grundkörpers derart an den jeweiligen Leitungskanal anzupassen, dass die Mittelachse des Grundkörpers zumindest im Wesentlichen deckungsgleich zu der Mittelachse des Leitungskanals verläuft.

In einer weiterhin vorteilhaften Ausgestaltung des Werkzeugs umfasst selbiges eine Modulaufnahme zur Aufnahme mindestens eines Hilfsmoduls. Die Modulaufnahme ist vorzugsweise an einem distalen Ende des Grundkörpers angeordnet und steht in eine Richtung parallel zu der Mittelachse des Grundkörpers über selbigen hinaus vor. Mittels der Modulaufnahme ist es möglich, mindestens ein Hilfsmodul aufzunehmen, das für einen jeweiligen Arbeitseinsatz unterstützend wirken kann.

Entsprechend kann es besonders vorteilhaft sein, wenn das Werkzeug ein in der Modulaufnahme aufgenommenes Hilfsmodul aufweist. Ein solches Hilfsmodul kann beispielsweise mindestens eine Kamera umfassen, mittels der optische Aufnahmen der Innenwandung des jeweiligen Leitungskanals gemacht werden können. Vorzugsweise umfasst das Hilfsmodul ferner mindestens eine Speichereinheit, mittels der von der Kamera erfasste Bildinformationen zumindest temporär gespeichert werden können. Ferner kann es vorteilhaft sein, wenn das Hilfsmodul mindestens eine Lichtquelle umfasst, um die Innenwandung des Leitungskanals auszuleuchten. Das Hilfsmodul kann beispielsweise von einem Smartphone gebildet sein.

Bevorzugt wirken das Hilfsmodul und die Modulaufnahme derart zusammen, dass die Kamera des Hilfsmoduls bei Vorliegen des Werkzeugs in einem in den Leitungskanal eingesetzten Zustand zur Beobachtung eines Wulstbereichs der Schweißwulst eingerichtet ist. Der Vorteil dieser Ausgestaltung liegt darin, dass nach erfolgter Entfernung einer jeweiligen Schweißwulst das Ergebnis direkt dokumentiert werden kann. Hierzu wird das Hilfsmodul aktiviert und der Grundkörper in bekannter Weise um eine volle Umdrehung um seine Mittelachse relativ zu dem Leitungskanal gedreht, sodass die Kamera des Hilfsmoduls jede Stelle des Wulstbereichs entlang des Umfangs optisch erfassen kann. Die aufgenommenen Bildinformationen werden vorzugsweise direkt gespeichert. Auf diese Weise kann der Arbeitserfolg dokumentiert werden und steht zur späteren Überprüfung bereit. Ein gesondertes Einführen einer Inspektionseinheit in den Leitungskanal nach erfolgter Entfernung einer jeweiligen Schweißwulst zur Kontrolle des jeweiligen Arbeitsergebnisses kann auf diese Weise entfallen, wodurch der Arbeitsfortschritt beschleunigt wird. Die Kamera kann ferner mit einem Rechner zur Bildverarbeitung verbunden sein, der dazu eingerichtet ist, Bilder der Kamera an ein Endgerät zu übertragen, abzuspeichern und/oder über eine Schnittstelle bereitzustellen.

Der zur Bildverarbeitung vorgesehene Rechner kann nach einem weiteren Vorschlag der Erfindung über eine geeignete Funk-Datenverbindung, beispielsweise WLAN oder Bluetooth, die von der Kamera aufgenommenen Bilder an ein geeignetes Endgerät, zum Beispiel ein Smartphone oder Tablet übertragen, sodass der Bediener den Prozess des Entfernens des Schweißwulstes in Echtzeit verfolgen kann. Zusätzlich können die Bilddaten über eine entsprechende Schnittstelle direkt im Schweißprotokoll einer CNC-Schweißmaschine gespeichert werden, die die Schweißverbindung der Leitungskanäle vorgenommen hat. Damit ist eine genaue Zuordnung der jeweiligen Schweißnaht und des entfernten Schweißwulstes möglich.

Auch können die Bilddaten der Kamera auf dem Rechner abgespeichert und beispielsweise am Ende eines Arbeitsvorganges oder Arbeitstages zu Dokumentations- und Archivierungszwecken ausgelesen werden. Die Daten können darüber hinaus auch an einem an dem Leitungskanal angebrachten Speicherchip abgespeichert werden, der zu beliebigen späteren Zeitpunkten geortet und beispielsweise im Schadensfall ausgewertet werden kann.

Die Stromversorgung des Rechners und der Kamera erfolgt vorzugsweise über einen ebenfalls am Kameramodul vorgesehenen Akku, dessen Kapazität vorzugsweise mindestens einen kompletten Arbeitstag abdeckt.

Das Kameramodul des erfindungsgemäßen Werkzeuges kann sowohl vor als auch hinter der Schneideinrichtung positioniert sein.

Unter einer Positionierung vor der Schneideinrichtung versteht man eine Anordnung auf der Betriebseinrichtung, d. h. beim Einbringen des Werkzeugs in den geschweißten Leitungskanal liegt das Kameramodul vom offenen Ende des Leitungskanals her betrachtet vor der Schneideinrichtung.

Alternativ kann nach einer weiteren Ausführungsform der Erfindung an der Schneideinrichtung bzw. dem Grundkörper auf der der Betriebseinrichtung abgewandten Seite auch eine zusätzliche Halteachse vorgesehen sein, auf der das Kameramodul befestigt ist, sodass am in den Leitungsabschnitt eingebrachten Werkzeug vom offenen Ende des Leitungsabschnittes her betrachtet das Kameramodul hinter der Schneideinrichtung angeordnet ist.

Schließlich kann eine solche Ausgestaltung des Werkzeugs vorteilhaft sein, bei der die Betriebseinrichtung an ihrem proximalen Ende eine Rasteinrichtung aufweist, mittels der die Betriebseinrichtung mit einem Hilfsgestänge in Kraft übertragender Weise verrastet werden kann. Da die einzelnen Segmente des Leitungskanals bis zu 20 m lang sein können, ist in der Regel ein Hilfsgestänge erforderlich, um das Werkzeug bis an eine gewünschte Einsatzstelle innerhalb des Leitungskanals vortreiben zu können. Für die Aufbringung eines Drehmoments auf die Betriebseinrichtung ist die Kraft übertragende Verrastung vorteilhaft, da es bei dieser Ausgestaltung möglich ist, das gewünschte Drehmoment auf das Hilfsgestänge aufzubringen, von dem ausgehend es unmittelbar auf die Betriebseinrichtung übertragen wird. Auf diese Weise kann die Betriebseinrichtung besonders einfach bei Vorliegen des Werkzeugs an seiner Einsatzstelle mit dem gewünschten Drehmoment beaufschlagt werden.

### Ausführungsbeispiele

Die Erfindung ist nachstehend anhand eines Ausführungsbeispiels, das in den Figuren dargestellt ist, näher erläutert. Es zeigt:
- Fig. 1: Eine Ansicht eines erfindungsgemäßen Werkzeugs,
- Fig. 2: Das Werkzeug gemäß Figur 1 vor der Einführung in einen Leitungskanal,
- Fig. 3: Das Werkzeug gemäß Figur 1 in einem in den Leitungskanal eingesetzten Zustand,
- Fig. 4: Eine weitere Ansicht des Werkzeugs gemäß Figur 1,
- Fig. 5: Ein Detail einer Schneideinrichtung des Werkzeugs gemäß Figur 1,
- Fig. 6: Ein weiteres Detail der Schneideinrichtung gemäß Figur 4,
- Fig. 7: Ein weiteres Detail der Schneideinrichtung gemäß Figur 4,
- Fig. 8: Ein weiteres Detail der Schneideinrichtung gemäß Figur 4

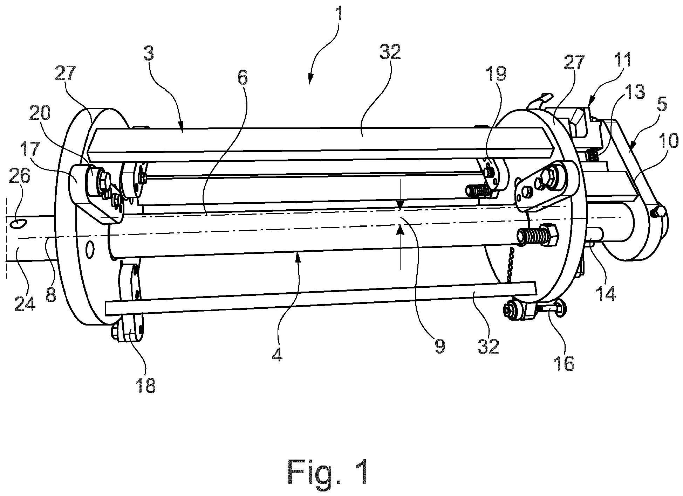

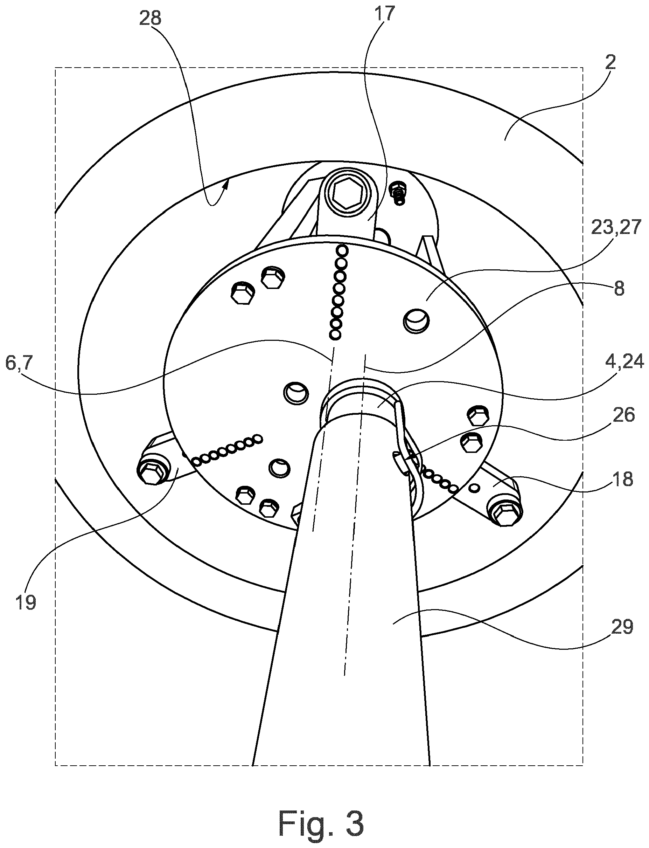

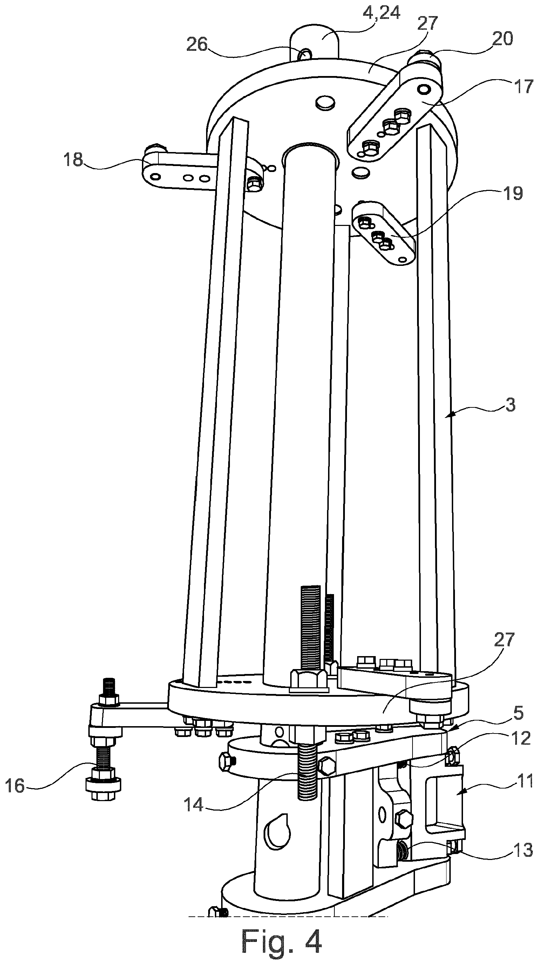

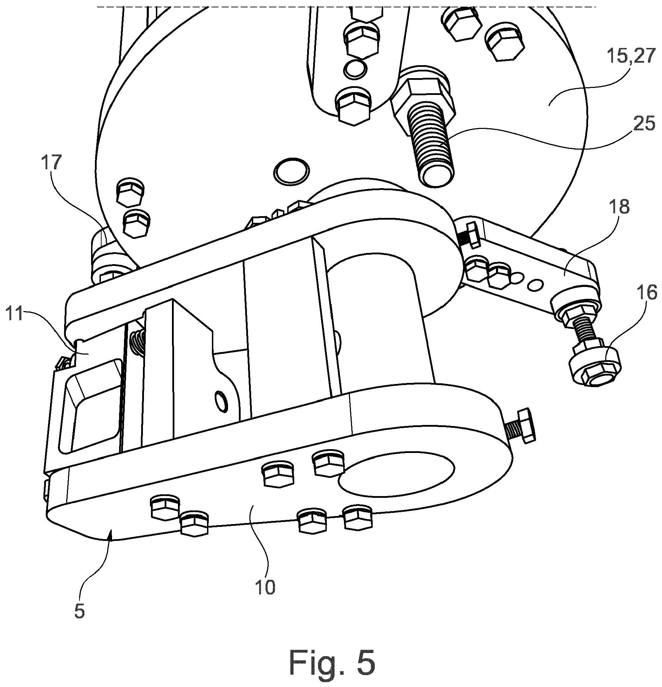

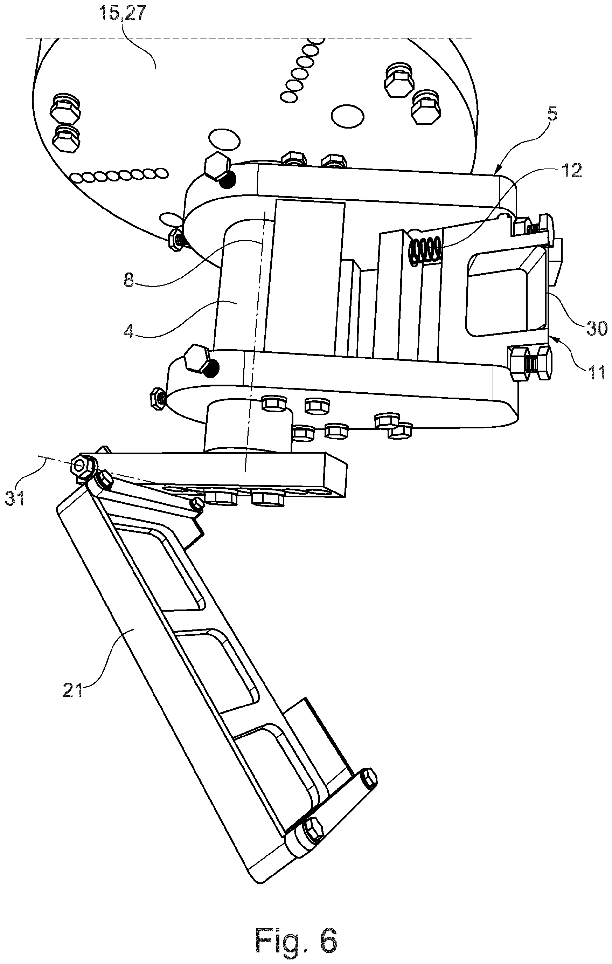

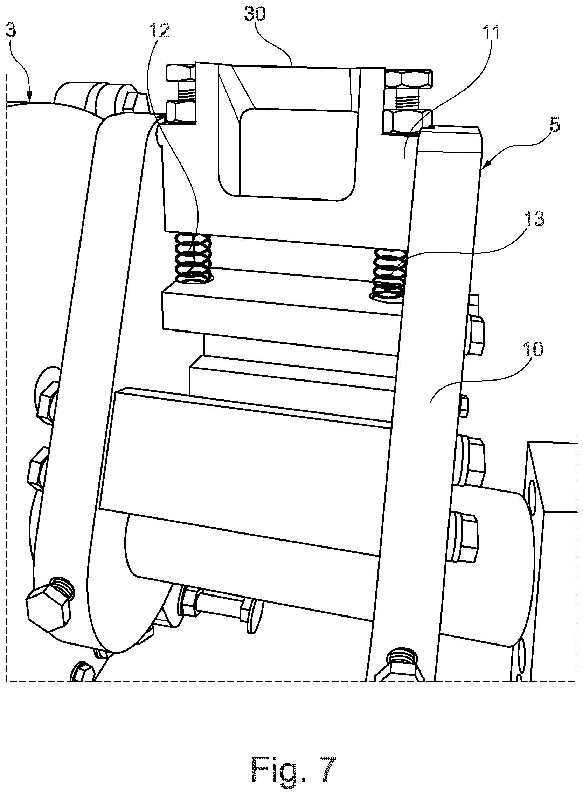

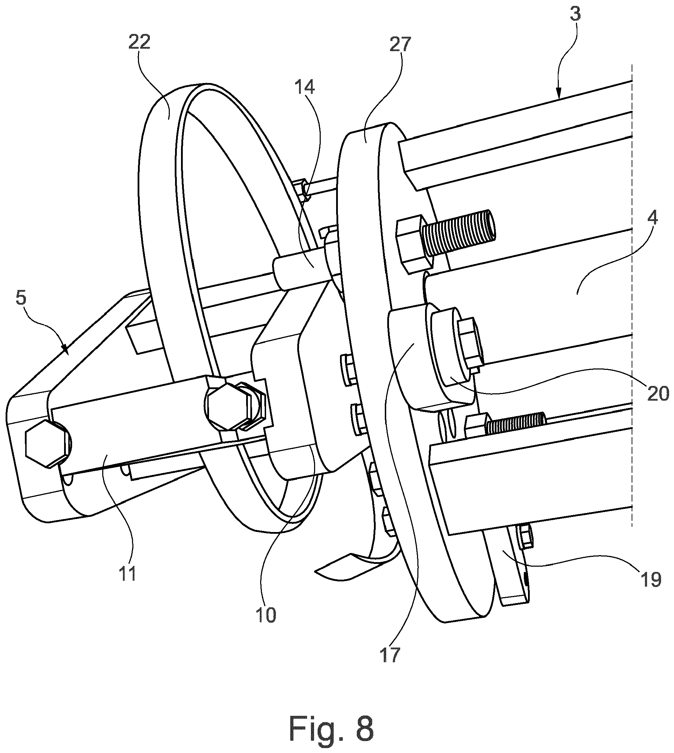

Ein Ausführungsbeispiel, das in den **Figuren 1 bis 8** dargestellt ist, beschreibt ein erfindungsgemäßes Werkzeug **1,** das einen Grundkörper **3,** eine Betriebseinrichtung **4** und eine Schneideinrichtung **5** umfasst. Der Grundkörper **3** weist in dem gezeigten Beispiel eine zylindrische Grundform auf, wobei der Grundkörper **3** einander gegenüberliegende, endseitige Stirnplatten **27** umfasst, die hier mittels insgesamt drei Verbindungsstangen **32** steif miteinander verbunden sind. Die Stirnplatten **27** weisen jeweils eine Kreisflächenform auf und bilden ein proximales Ende **23** und ein distales Ende **15** des Grundkörpers **3.** Dieser weist entsprechend eine zylindrische Grundform auf. In dem Bereich zwischen den Stirnplatten **27** ist der Grundkörper **3** offen ausgebildet, wobei die genannten Verbindungsstangen **32** die Stirnplatten **27** nach Art eines Gerippes miteinander verbinden. Die Stirnplatten **27** sind in dem gezeigten Beispiel in einem parallel zu einer Mittelachse **6** des Grundkörpers gemessenen Abstand von ca. 50 cm angeordnet. Mittels dieser Ausgestaltung kann das Werkzeug **1** besonders zuverlässig in einem jeweiligen Leitungskanal **2** geführt werden, ohne in unbeabsichtigter Weise innerhalb des Leitungskanals **2** zu verkanten.

Der Grundkörper **3** umfasst in dem gezeigten Beispiel insgesamt sechs Führungselemente **17, 18, 19,** von denen jeweils drei an den beiden Stirnplatten **27** angeordnet sind. Die Führungselemente **17, 18, 19** erstrecken sich radial bezogen auf die Mittelachse **6** des Grundkörpers **3** und stehen jeweils in radiale Richtung über die Stirnplatten **27** hinaus vor. Sie sind jeweils 120° bezogen auf die die Mittelachse **6** des Grundkörpers **3** versetzt zueinander angeordnet. Auf diese Weise bilden die Führungselemente **17, 18, 19** radial außenliegende Führungsflächen des Grundkörpers **3** aus, mit denen der Grundkörper **3** bei einem in einen jeweiligen Leitungskanal **2** eingesetzten Zustand an einer Innenwandung **28** des Leitungskanals **2** geführt ist. Die Führungselemente **17, 18, 19** sind in verschiedenen radialen Stellungen wechselweise an den Stirnplatten **27** montierbar, wodurch die radialen Abstände der Führungsflächen von der Mittelachse **6** eingestellt werden können. Auf diese Weise kann der Grundkörper **3** besonders einfach an verschiedene Leitungskanäle **2** mit unterschiedlichen Innendurchmessern angepasst werden. Somit ist es bei dem gezeigten Grundkörper **3** besonders einfach möglich, diesen in seinen Dimensionen auf die Dimensionen eines jeweils zu bearbeitenden Leitungskanals **2** anzupassen, und zwar derart, dass die Mittelachse 6 des Grundkörpers **3** zumindest im Wesentlichen deckungsgleich mit einer Mittelachse **7** des jeweiligen Leitungskanals **2** verläuft.

Die Führungselemente **17, 18, 19** weisen jeweils außenliegend eine Führungsrolle **20** auf, die um eine jeweilige Drehachse drehbar ausgebildet ist. Die Drehachsen der Führungsrollen **20** sind parallel zu der Mittelachse **6** des Grundkörpers **3** orientiert. Mittels der Führungsrollen **20** kann der Grundkörper **3** - und mithin das Werkzeug **1** insgesamt - besonders reibungsarm um seine Mittelachse **6** relativ zu dem Leitungskanal **2** gedreht werden, wobei die Führungsrollen **20** an der Innenwandung **28** des Leitungskanals **2** abrollen.

Die Betriebseinrichtung **4** weist in dem gezeigten Beispiel ein langgestrecktes Rohr auf, das die Stirnplatten **27** des Grundkörpers **3** jeweils durchdringt. Dies ergibt sich besonders gut anhand von **Figur 1****.** Die Betriebseinrichtung **4** ist unter Ausbildung einer Schwenkachse **8** relativ zu dem Grundkörper **3** verdrehbar an selbigem gelagert, sodass sich die Betriebseinrichtung **4** bei Aufbringen eines Drehmoments relativ zu dem Grundkörper **3** drehen kann - zumindest in einem gewissen Winkelbereich, wie nachstehend gesondert erläutert wird.

Die Schwenkachse **8** der Betriebseinrichtung **4** ist parallel zu der Mittelachse **6** des Grundkörpers **3** ausgerichtet und verläuft in einem Abstand **9** zu der Mittelachse **6.** Dieser Abstand **9** beträgt in dem gezeigten Beispiel ca. 4 cm. Entsprechend ist die Betriebseinrichtung **4** außermittig bezogen auf den Grundkörper **3** ausgerichtet.

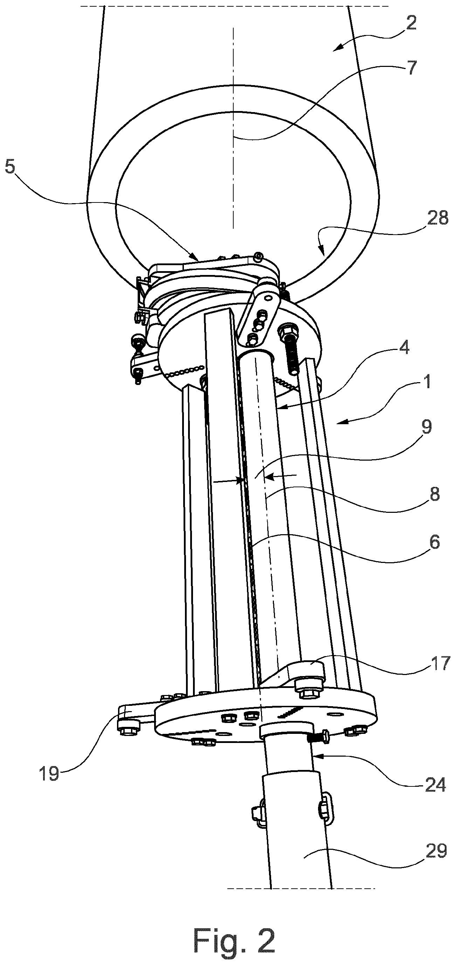

An einem proximalen Ende **24** der Betriebseinrichtung **4,** die über das proximales Ende **23** des Grundkörpers 3 in eine von dem Grundkörper **3** weg gerichtete Richtung vorsteht, verfügt die Betriebseinrichtung **4** über eine Rasteinrichtung **26.** Die Rasteinrichtung **26,** die in dem gezeigten Beispiel von einer das Rohr der Betriebseinrichtung **4** durchdringenden Ausnehmung gebildet ist, ist dazu vorgesehen, in Kraft übertragender Weise mit einem Hilfsgestänge **29** verbunden zu werden. Dies ergibt sich besonders gut anhand von **Figur 2****.** Insbesondere kann das Hilfsgestänge **29** mittels eines bolzenförmigen Verbindungsmittels an der Rasteinrichtung **26** verrastet werden, sodass über das Hilfsgestänge **29** das Aufbringen eines Drehmoments auf die Betriebseinrichtung **4** möglich ist.

An einem dem proximalen Ende **24** gegenüberliegenden distalen Ende ist die Schneideinrichtung **5** an die Betriebseinrichtung **4** angeschlossen und mit dieser verbunden. Die Schneideinrichtung **5** umfasst einen Kragkörper **10** sowie ein Schneidelement **11.** Der Kragkörper **10** ist unmittelbar an die Betriebseinrichtung **4** angeschlossen und erstreckt sich in radiale Richtung bezogen auf die Schwenkachse **8** der Betriebseinrichtung **4.** An einem der Schwenkachse **8** abgewandten Ende des Tragkörpers **10** ist das Schneidelement **11** angeordnet. Dieses umfasst eine sich parallel zu der Mittelachse **6** des Grundkörpers **3** erstreckende Schneidkante **30,** die bestimmungsgemäß zum schneidenden Eingriff mit einer jeweilig zu entfernenden Schweißwulst **22** ausgebildet ist.

Infolge der Anordnung der Schneideinrichtung **5** an der Betriebseinrichtung **4** kann die Schneideinrichtung **5** mittels der Betriebseinrichtung **4** um die Schwenkachse **8** verschwenkt werden. Auf diese Weise kann die Schneideinrichtung **5** wechselweise in eine Passivstellung und eine Aktivstellung überführt werden. Bei Vorliegen in der Passivstellung ist die Schneideinrichtung **5** derart bezogen auf den Grundkörper **3** angeordnet, dass sich das Schneidelement **11** innerhalb eines gedachten, den Grundkörper **3** passgenau einhüllenden Zylinders befindet. Dieser gedachte Zylinder beinhaltet die Führungsflächen der Führungselemente **17, 18, 19** und erstreckt sich parallel zu der Mittelachse **6** des Grundkörpers **3.** Die Anordnung der Schneideinrichtung **5** in der beschriebenen Weise hat den Effekt, dass das Werkzeug **1** bei Vorliegen der Schneideinrichtung **5** in ihrer Passivstellung innerhalb des jeweiligen Leitungskanals **2** vorgetrieben werden kann, ohne dass die Schneideinrichtung **5** - und insbesondere ihr Schneidelement **11** - mit der Innenwandung **28** des Leitungskanals **2** eingreifen.

Erst mittels der Überführung der Schneideinrichtung **5** in ihre Aktivstellung wird das Schneidelement **11** derart um die Schwenkachse **8** der Betriebseinrichtung **4** nach außen geschwenkt, dass das Schneidelement **11** aus dem gedachten Zylinder herausgeführt werden kann. Dies ist aufgrund der außermittigen Anordnung der Betriebseinrichtung **4** bezogen auf den Grundkörper **3** möglich, da die Kreisbahn, auf der die Schneideinrichtung **5** mittels Verschwenkens der Betriebseinrichtung **4** um ihre Schwenkachse **8** geführt wird, von einem Umfang des Grundkörpers abweicht und seitlich dazu versetzt ist. Auf diese Weise erhält das Schneidelement **11** im Zuge der Überführung der Schneideinrichtung **5** in die Aktivstellung eine radiale Bewegungskomponente bezogen auf die Mittelachse **6** des Grundkörpers **3.** Das heißt das Schneidelement **11** bewegt sich effektiv bezogen auf die Mittelachse **6** radial nach außen, wenn die Betriebseinrichtung **4** mitsamt der daran angeschlossenen Schneideinrichtung **5** um die Schwenkachse **8** verschwenkt wird.

Wenn sich das Werkzeug **1** in einem in den jeweiligen Leitungskanal **2** eingesetzten Zustand befindet, führt die Überführung der Schneideinrichtung **5** in ihre Aktivstellung entsprechend dazu, dass das Schneidelement **11** mit seiner Schneidkante **30** mit der Innenwandung **28** des Leitungskanals **2** eingreifen kann. An besagter Innenwandung **28** befindet sich die zu entfernende Schweißwulst **22,** die mithin von dem Schneidelement **11** erreicht wird und daraufhin abgeschnitten und entfernt werden kann.

Hierzu ist bei dem gezeigten Werkzeug **1** vorgesehen, dass es um dessen Mittelachse **6** innerhalb des Leitungskanals **2** gedreht wird, sobald sich die Schneideinrichtung **5** in ihrer Aktivstellung befindet. In dem gezeigten Beispiel dient die Betriebseinrichtung **4** zur Aufbringung des für diese Drehung erforderlichen Drehmoments auf den Grundkörper **3.** Damit dies möglich ist, verfügt der Grundkörper **3** in dem gezeigten Beispiel über ein Anschlagelement **14,** das zur Zusammenwirkung mit der Schneideinrichtung **5** eingerichtet ist. Somit begrenzt das Anschlagelement **14** einen Schwenkraum der Schneideinrichtung **5** derart, dass letztere im Zuge ihrer Verschwenkung um die Schwenkachse **8** der Betriebseinrichtung **4** an dem Anschlagelement **14** anschlägt und mithin nicht weiter relativ zu dem Grundkörper **3** verschwenkt werden kann. Das auf die Betriebseinrichtung **4** aufgebrachte Drehmoment wird ab dem Anschlagen der Schneideinrichtung **5** an dem Anschlagelement **14** fortan über das Anschlagelement **14** auf den Grundkörper **3** übertragen. Hierdurch kann der Grundkörper **3** um dessen Mittelachse **6** innerhalb des Leitungskanals **2** gedreht werden. Hierbei muss für ein erfolgreiches Entfernen der Schweißwulst **22** das Drehmoment von solchem Betrag sein, dass der durch den schneidenden Eingriff des Schneidelements **11** mit der Schweißwulst **22** bedingte Widerstand überwunden wird. Für ein vollständiges Entfernen der Schweißwulst **22** wird der Grundkörper **3** bzw. das gesamte Werkzeug **1** um die Mittelachse **6** des Grundkörpers **3** (und mithin die Mittelachse **7** des Leitungskanals **2**) um mindestens eine ganze Umdrehung gedreht, sodass das Schneidelement **11** die Schweißwulst **22** einmal vollständig abfährt.

Anschließend kann die Schneideinrichtung **5** zurück in ihre Passivstellung überführt werden, die in dem gezeigten Beispiel durch ein zweites Anschlagelement **25** des Grundkörpers **3** definiert ist. Das zweite Anschlagelement **25** ist um ein Winkelmaß gegenüber dem ersten Anschlagelement **14** versetzt angeordnet. Es ist ebenfalls zur Zusammenwirkung mit der Schneideinrichtung **5** eingerichtet, wobei es sich in einen Schwenkbereich der Schneideinrichtung **5** erstreckt, sodass letztere im Zuge ihrer Verschwenkung um die Schwenkachse **8** der Betriebseinrichtung **4** an dem Anschlagelement **25** anschlägt.

Nach alldem definieren in dem gezeigten Beispiel die beiden Anschlagelemente **14, 25** des Grundkörpers **3** einen Winkelbereich, innerhalb dessen die Betriebseinrichtung **4** frei relativ zu dem Grundkörper **3** um die Schwenkachse **8** gedreht werden kann, ohne dass ein Drehmoment von der Betriebseinrichtung **4** auf den Grundkörper **3** übertragen wird. Letzteres ist sodann beim Anschlagen der Schneideinrichtung **5** an dem ersten Anschlagelement **14** in eine erste Drehrichtung und umgekehrt beim Anschlagen der Schneideinrichtung **5** an dem zweiten Anschlagelement **25** in eine der ersten Drehrichtung entgegengesetzte zweite Drehrichtung möglich. Die Schneideinrichtung **5** befindet sich mithin innerhalb eines von den beiden Anschlagelementen **14, 25** begrenzten Schwenkraums, innerhalb dessen sie mittels der Betriebseinrichtung **4** um die Schwenkachse **8** verschwenkt werden kann.

Erfindungsgemäß ist das Schneidelement **11** der Schneideinrichtung **5** gefedert an dem Kragkörper **10** der Schneideinrichtung **5** gelagert. Hierzu umfasst die Schneideinrichtung **5** in dem gezeigten Beispiel zwei Federeinheiten **12, 13,** die hier jeweils von einer Spiralfeder gebildet sind. Die Federeinheiten **12, 13** sind an einander gegenüberliegenden Enden des Schneidelements **11** an selbiges angeschlossen und wirken unabhängig voneinander. Die Federeinheiten **12, 13** haben den Effekt, dass das Schneidelement **11** sich in Richtung von Federachsen der Federeinheiten **12, 13** relativ zu dem Kragkörper **10** bewegen kann. Die Federachsen sind parallel zueinander orientiert sowie derart ausgerichtet, dass sie sich bei Vorliegen der Schneideinrichtung **5** in deren Aktivstellung zumindest im Wesentlichen radial bezogen auf die Mittelachse **6** des Grundkörpers **3** erstrecken. Auf diese Weise ist das Schneidelement **11** derart gefedert gegenüber dem Kragkörper **10** geführt, dass es einer Form der Innenwandung **28** folgen kann. Dies betrifft insbesondere Unregelmäßigkeiten der Form des Leitungskanals **2,** die eigentlich kreisförmig sein sollte, aufgrund von Einwirkungen auf der Baustelle, durch Temperatur oder sonstige Einflüsse jedoch von dieser Kreisform abweichen kann.

Bevorzugt werden die Federeinheiten **12, 13** bei der Überführung der Schneideinrichtung **5** in deren Aktivstellung infolge des Eingriffs des Schneidelements **11** mit der zu entfernenden Schweißwulst **22** zumindest leicht komprimiert und dadurch vorgespannt, sodass das Schneidelement **11** zuverlässig in Richtung der Innenwandung **28** gedrückt wird. Auf diese Weise kann das Schneidelement **11** unter Ausschöpfung eines Federwegs der Federeinheiten **12, 13** einer gegebenenfalls vorliegenden, unregelmäßigen Auswölbung der Innenwandung **28** des Leitungskanals **2** folgen und das Schneidelement **11** weiterhin bestimmungsgemäßem Eingriff mit der Schweißwulst **22** halten. Ebenso ist es möglich, dass die Federeinheiten **12, 13** im Zuge der Entfernung der Schweißwulst **22** weiter komprimiert werden, wenn das Schneidelement **11** infolge einer unregelmäßigen Verformung des Leitungskanals **2** radial nach innen verdrängt wird. Im Ergebnis kann die Schweißwulst **22** auch bei Verformung Leitungskanälen **2** zuverlässig und sauber entfernt werden, ohne dass eine Nacharbeit erforderlich ist.

Da das Schneidelement **11** hier mittels zwei Federeinheiten **12, 13** gelagert ist, kann es eine gewisse Schrägstellung einnehmen und hierdurch Unebenheiten der Innenwandung **28** in Richtung der Mittelachse **7** des Leitungskanals **2** ausgleichen. Hierdurch ist ein unbeabsichtigtes Verkanten oder Einschneiden des Schneidelements **11** in die Innenwandung **28** zusätzlich vermieden.

In dem gezeigten Beispiel ist die Schneideinrichtung **5** über ein distales Ende **15** des Grundkörpers **2** hinaus vorstehend angeordnet, sodass sie gegenüber dem Grundkörper **3** auskragt. Aufgrund dieser Ausgestaltung kann der Grundkörper **3** für eine Positionierung des Werkzeugs **1** an einer jeweiligen Einsatzstelle vollständig diesseits der zu entfernenden Schweißwulst **22** verbleiben und muss diese nicht überwinden, um die Schneideinrichtung **5** relativ zu der Schweißwulst **22** auszurichten. Hierdurch ist der Vortrieb des Werkzeugs **1** in dem Leitungskanal **2** vereinfacht.

In besonders vorteilhafter Weise verfügt das gezeigte Werkzeug **1** zudem über eine Positionierungshilfe **16,** die sich ausgehend von dem distalen Ende **15** des Grundkörpers **3** in Richtung der Mittelachse **6** des Grundkörpers **3** von dem Grundkörper **3** weg erstreckt. Die Positionierungshilfe **16** ist radial außenliegend an der distalen Stirnplatte **27** des Grundkörpers **3** angeordnet, sodass sie im Zuge des Vortriebs des Werkzeugs **1** innerhalb des Leitungskanals **2** stirnseitig an die radial an der Innenwandung **28** des Leitungskanals **2** vorstehende Schweißwulst **22** anschlagen kann. Für den Betrieb des Werkzeugs **1** wird letzteres demzufolge innerhalb des Leitungskanals **2** vorgetrieben, bis ein Bediener des Werkzeugs **1** den Anschlag der Positionierungshilfe **16** an der Schweißwulst **22** in Form eines plötzlichen Widerstands bemerkt. Daraufhin weiß der Bediener, dass das Werkzeug **1** seine Einsatzstelle erreicht hat. Die Positionierungshilfe **16** ist dabei derart auf die Schneideinrichtung **5** abgestimmt, dass beim Anschlag der Positionierungshilfe **16** an der Schweißwulst **22** unmittelbar die Schneideinrichtung **5** bestimmungsgemäß relativ zu der Schweißwulst **22** ausgerichtet ist.

Das gezeigte Werkzeug **1** verfügt des Weiteren über eine Modulaufnahme **21,** die an ein von dem Grundkörper **3** abgewandtes Ende der Betriebseinrichtung **4** angeschlossen ist. Die Modulaufnahme **21** ist in dem gezeigten Beispiel zur Aufnahme eines handelsüblichen Smartphones eingerichtet, das im Sinne der vorliegenden Anmeldung ein Hilfsmodul darstellt. Anstelle eines Smartphones kann die Modulaufnahme auch zur Aufnahme einer handelsüblichen Kamera, insbesondere einer sogenannten Actioncam, sowie eines geeigneten Beleuchtungseinrichtung vorgesehen sein. Die Modulaufnahme **21** ist um eine Modulachse **31** relativ zu der Betriebseinrichtung **4** verschwenkbar, sodass das in der Modulaufnahme **21** gelagerte Hilfsmodul individuell ausgerichtet werden kann. Insbesondere kann das Hilfsmodul eine Kamera sowie eine Speichereinheit umfassen, wobei mittels letzterer Bildinformationen, die mittels der Kamera erfasst werden, gespeichert werden können. Ferner kann das Hilfsmodul mindestens eine Lichtquelle umfassen, mittels der ein mittels der Kamera zu beobachtender Bereich ausgeleuchtet werden kann.

Mittels der in der Modulaufnahme **21** angeordneten Kamera kann der Arbeitsprozess des Entfernens der jeweiligen Schweißwulst 22 beobachtet und dokumentiert werden, ggf. sogar in Echtzeit.

Die Anordnung der Modulaufnahme **21** hat den besonderen Vorteil, dass im Anschluss an die Entfernung einer jeweiligen Schweißwulst **22** unmittelbar eine Dokumentation des Arbeitserfolgs vorgenommen werden kann. Hierzu ist es lediglich erforderlich, das Werkzeug **1** eine kurze Strecke entlang der Mittelachse **7** des Leitungskanals **2** zurückzuziehen, sodass der Bereich, in dem zuvor die Schweißwulst **22** entfernt wurde, optisch von der Kamera des Hilfsmoduls erfasst wird. Um die Innenwandung **28** des Leitungskanals vollständig zu inspizieren, wird sodann das Werkzeug **1** um die Mittelachse **6** des Grundkörpers **3** relativ zu dem Leitungskanal **2** gedreht und dadurch die Innenwandung **28** an der Einsatzstelle einmal in Umfangsrichtung vollständig abgefahren. Um das hierfür erforderliche Drehmoment auf den Grundkörper **3** zu übertragen, wird abermals die Betriebseinrichtung **4** verwendet, diesmal jedoch mit einem entgegengesetzten Drehmoment gegenüber dem Vorgang des Abschneidens der Schweißwulst **22.** Bei Aufbringen dieses entgegengesetzten Drehmoments wird zunächst die Schneideinrichtung **5** in deren Passivstellung verschwenkt, in der sie gegen das zweite Anschlagelement **25** anschlägt. Dieser Anschlag bildet sodann die Drehmoment übertragende Kopplung der Betriebseinrichtung **4** mit dem Grundkörper **3,** sodass das weitere Aufbringen des Drehmoments die gewünschte Drehung des Grundkörpers **3** und mithin des Werkzeugs **1** innerhalb des Leitungskanals **2** bewirkt. Bei dieser Ausgestaltung dreht sich das Werkzeug **1** bei der Entfernung der Schweißwulst **22** zum einen und bei der Dokumentation des Arbeitserfolgs zum anderen jeweils in entgegengesetzte Drehrichtungen innerhalb des Leitungskanals **2.**

### Bezugszeichenliste:

- 1: Werkzeug
- 2: Leitungskanal
- 3: Grundkörper
- 4: Betriebseinrichtung
- 5: Schneideinrichtung
- 6: Mittelachse
- 7: Mittelachse
- 8: Schwenkachse
- 9: Abstand
- 10: Kragkörper
- 11: Schneidelement
- 12: Federeinheit
- 13: Federeinheit
- 14: Anschlagelement
- 15: distales Ende
- 16: Positionierungshilfe
- 17: Führungselement
- 18: Führungselement
- 19: Führungselement
- 20: Führrolle
- 21: Modulaufnahme
- 22: Schweißwulst
- 23: proximales Ende
- 24: proximales Ende
- 25: Anschlag
- 26: Rasteinrichtung
- 27: Stirnplatte
- 28: Innenwandung
- 29: Hilfsgestänge
- 30: Schneidkante
- 31: Modulachse
- 32: Verbindungsstange

## Patentansprüche

1. Werkzeug (1) zur Entfernung einer Schweißwulst an einer Innenwandung eines Leitungskanals (2), umfassend
- einen Grundkörper (3) zur Führung des Werkzeugs (1) in dem Leitungskanal (2),
- eine mit dem Grundkörper (3) verbundene Betriebseinrichtung (4),
- eine Schneideinrichtung (5),
wobei der Grundkörper (3) in seinen Dimensionen derart an einen Innendurchmesser des Leitungskanals (2) angepasst ist, dass eine Mittelachse (6) des Grundkörpers (3) bei Vorliegen des Werkzeugs (1) in einem in den Leitungskanal (2) eingesetzten Zustand zumindest im Wesentlichen deckungsgleich zu einer Mittelachse (7) des Leitungskanals (2) verläuft,
wobei die Betriebseinrichtung (4) in Drehmoment übertragender Weise mit dem Grundkörper (3) zusammenwirken kann, sodass mittels Aufbringens eines Drehmoments auf die Betriebseinrichtung (4) der Grundkörper (3) in seinem in den Leitungskanal (2) eingesetzten Zustand um seine Mittelachse (6) innerhalb des Leitungskanals (2) drehbar ist,
wobei die Schneideinrichtung (5) ausgehend von einer Passivstellung, in der sie sich bestimmungsgemäß außer Eingriff mit der Schweißwulst befindet, in eine Aktivstellung überführbar ist, in der sie sich bestimmungsgemäß in schneidendem Eingriff mit der Schweißwulst befindet,
wobei die Schneideinrichtung (5) einen sich radial erstreckenden Kragkörper (10) und ein radial außen an dem Kragkörper (10) gelagertes Schneidelement (11) umfasst, **dadurch gekennzeichnet, dass**
das Schneidelement (11) mittels mindestens einer Federeinheit (12, 13) an dem Kragkörper (10) gelagert ist,
wobei die Federeinheit (12, 13) für das Schneidelement (11) einen radialen Federweg bereitstellt, sodass das Schneidelement (11) bei Vorliegen der Schneideinrichtung (5) in ihrer Aktivstellung sowie bei bestimmungsgemäßem Betrieb des Werkzeugs (1) an der Innenwandung des Leitungskanals (2) in radiale Richtung gefedert geführt ist.

2. Werkzeug (1) nach Anspruch 1, **dadurch gekennzeichnet, dass** das Schneidelement (11) mittels mindestens zwei Federeinheiten (12, 13) an dem Kragkörper (10) gelagert ist, wobei vorzugsweise die Federeinheiten (12, 13) an einander gegenüberliegenden Enden des Schneidelements (11) an selbiges angeschlossen sind.

3. Werkzeug (1) nach einem der vorhergehenden Ansprüche, **dadurch gekennzeichnet, dass** die Schneideinrichtung (5) an der Betriebseinrichtung (4) angeordnet ist und mit dieser zusammenwirkt, wobei die Schneideinrichtung (5) zwischen ihrer Passivstellung und ihrer Aktivstellung mittels einer Schwenkbewegung um eine Schwenkachse (8) der Betriebseinrichtung (4) überführbar ist, indem auf die Betriebseinrichtung (4) ein Drehmoment aufgebracht wird.

4. Werkzeug (1) nach Anspruch 3, **dadurch gekennzeichnet, dass** die Schwenkachse (8) der Betriebseinrichtung (4) parallel zu der Mittelachse (6) des Grundkörpers (3) orientiert ist und sich in einem Abstand (9) zu der Mittelachse (6) erstreckt, sodass die Schwenkachse (8) bei Vorliegen des Werkzeugs (1) in einem in den Leitungskanal (2) eingesetzten Zustand außermittig in dem Leitungskanal (2) verläuft.

5. Werkzeug (1) nach Anspruch 3 oder 4, **dadurch gekennzeichnet, dass** der Grundkörper (3) mindestens ein Anschlagelement (14) umfasst, an dem die Schneideinrichtung (5) infolge ihrer Verschwenkung um die Schwenkachse (8) anschlagen kann, wobei infolge des Anschlags der Schneideinrichtung (5) an dem Anschlagelement (14) ein auf die Betriebseinrichtung (4) aufgebrachtes Drehmoment auf den Grundkörper (3) übertragbar ist.

6. Werkzeug (1) nach Anspruch 5, **dadurch gekennzeichnet, dass** sich die Schneideinrichtung (5) bei Vorliegen in einem an dem Anschlagelement (14) angeschlagenen Zustand in ihrer Aktivstellung befindet.

7. Werkzeug (1) nach Anspruch 6, **gekennzeichnet durch** mindesten ein zweites Anschlagelement (25), das in Umfangsrichtung bezogen auf die Schwenkachse (8) der Betriebseinrichtung (4) von dem ersten Anschlagelement (14) um ein Winkelmaß versetzt angeordnet ist, wobei die Schneideinrichtung (5) infolge ihrer Verschwenkung um die Schwenkachse (8) an dem zweiten Anschlagelement (25) anschlagen kann und infolge dieses Anschlags ein auf die Betriebseinrichtung (4) aufgebrachtes Drehmoment auf den Grundkörper (3) übertragbar ist.

8. Werkzeug (1) nach Anspruch 7, **dadurch gekennzeichnet, dass** sich die Schneideinrichtung (5) in einem Schwenkraum zwischen den beiden Anschlägen (14, 25) befindet, wobei der Schwenkraum durch den ersten Anschlag (14) in eine erste Schwenkrichtung und durch den zweiten Anschlag (25) in eine der ersten Schwenkrichtung entgegengesetzte zweite Schwenkrichtung begrenzt ist.

9. Werkzeug (1) nach einem der vorhergehenden, **dadurch gekennzeichnet, dass** die Schneideinrichtung (5) in Richtung der Mittelachse (6) des Grundkörpers (3) betrachtet über ein distales Endes (15) des Grundkörpers (3) hinaus vorsteht, wobei vorzugsweise sich die Schneideinrichtung (5) bei Vorliegen in ihrer Passivstellung vollständig innerhalb eines gedachten, den Grundkörper (3) passgenau einhüllenden Zylinders befindet.

10. Werkzeug (1) nach einem der vorhergehenden Ansprüche, **gekennzeichnet durch** eine Positionierungshilfe (16), die sich ausgehend von einem distalen Ende (15) des Grundkörpers (3) in eine Richtung parallel zu der Mittelachse (6) des Grundkörpers (3) von dem Grundkörper (3) weg erstreckt.

11. Werkzeug (1) nach Anspruch 10, **dadurch gekennzeichnet, dass** die Positionierungshilfe (16) an einen bezogen auf die Mittelachse (6) radial äußeren Randbereich des Grundkörpers (3) angeschlossen ist, sodass sie dazu geeignet ist, im Zuge eines Vorschubs des Werkzeugs (1) innerhalb des Leitungskanals (2) stirnseitig an der zu entfernenden Schweißwulst anzuschlagen.

12. Werkzeug (1) nach einem der vorhergehenden Ansprüche, **dadurch gekennzeichnet, dass** der Grundkörper (3) eine Mehrzahl radial bezogen auf die Mittelachse (6) außenliegende Führungselemente (17, 18, 19) aufweist, die zur Führung des Werkzeugs (1) an der Innenwandung des Leitungskanals (2) eingerichtet sind, wobei vorzugsweise die Führungselemente (17, 18, 19) jeweils eine um eine parallel zu der Mittelachse (6) des Grundkörpers (3) orientierte Drehachse drehbar gelagerte Führungsrolle (20) aufweisen, mit der der Grundkörper (3) in Umfangsrichtung des Leitungskanals (2) gegenüber der Innenwandung abrollen kann.

13. Werkzeug (1) nach einem der vorhergehenden Ansprüche, **gekennzeichnet durch** eine Modulaufnahme (21) zur Aufnahme mindestens eines Hilfsmoduls, wobei vorzugsweise die Modulaufnahme (21) an einem distalen Ende (15) des Grundkörpers (3) in eine Richtung parallel zu der Mittelachse (6) des Grundkörpers (3) über den Grundkörper (3) hinaus vorsteht.

14. Werkzeug (1) nach Anspruch 13, **gekennzeichnet durch** ein in der Modulaufnahme (21) aufgenommenes Hilfsmodul, das mindestens eine Kamera sowie vorzugsweise eine Speichereinheit zur Speicherung von mittels der Kamera erfasster Bildinformationen umfasst, wobei die Modulaufnahme (21) und das Hilfsmodul derart zusammenwirken, dass die Kamera bei Vorliegen des Werkzeugs (1) in einem in den Leitungskanal (2) eingesetzten Zustand zur Beobachtung eines Wulstbereichs der Schweißwulst eingerichtet ist.

15. Werkzeug (1) nach einem der vorhergehenden Ansprüche, **dadurch gekennzeichnet, dass** die Betriebseinrichtung (4) mit einem proximalen Ende (24) an einem proximalen Ende (23) des Grundkörpers (3) in eine Richtung parallel zu der Mittelachse (6) des Grundkörpers (3) über den Grundkörper (3) hinaus vorsteht, wobei die Betriebseinrichtung (4) an ihrem proximalen Ende (24) eine Rasteinrichtung (26) zur Kraft übertragenden Verrastung der Betriebseinrichtung (4) mit einem Hilfsgestänge (29) aufweist.
